# FASCICULE DE BREVET EUROPEEN

(11) **EP 0 660 999 B1**
(45) Date de publication et mention de la délivrance du brevet: **12.05.1999**
(21) Numéro de dépôt: 94403059.2
(22) Date de dépôt: 30.12.1994
(51) Int. Cl.: A01N 25/10

(54) **La gomme guar comme agent anti-entrainement**
Guar-Mehl als Antiabdriftmittel
Guar gum as drift control agent

(30) Priorité: 03.01.1994 US 177051
(43) Date de publication de la demande: 05.07.1995
(73) Titulaire: RHODIA INC., Cranbury, New Jersey 08512 (US)
(72) Inventeur: Hazen, James, Plainsboro, NJ 08536 (US)
(74) Mandataire: Seugnet, Jean Louis

(56) Documents cités:
- EP-A- 0 249 728
- EP-A- 0 277 932
- FR-A- 2 174 263
- FR-A- 2 383 696
- US-A- 4 510 081
- PATENT ABSTRACTS OF JAPAN vol. 14, no. 294 (C-0732) & JP-A-02 096 503 (NIPPON SHOKUBAI KAGAKU KOGYO CO LTD) 09 Avril 1990
- PATENT ABSTRACTS OF JAPAN vol. 5, no. 194 (C-082) & JP-A-56 113 707 (KURARAY CO LTD) 07 Septembre 1981

## Description

La présente invention concerne la maîtrise de la distribution des dimensions des gouttelettes dans les pulvérisations ou épandages aqueux dans l'air et, plus particulièrement, la réduction au minimum de l'entraînement du nuage de pulvérisation.

Le brouillard ou l'extrémité, constituée de fines particules, des spectres de la taille de gouttelettes (généralement ceux ayant un diamètre inférieur à 150 µm) que l'on trouve dans les procédés de pulvérisation et d'épandage aqueux du commerce, tels que ceux qui sont associés à la lutte aérienne contre le feu et la maîtrise des poussières, aux laveurs de gaz, aux traitements du pétrole brut répandu et à divers procédés d'application d'ingrédients bioactifs, notamment ceux qui sont associés à l'agriculture, réduisent souvent l'efficacité de ces procédés.

Lorsque les pulvérisations doivent être dirigées vers une cible spécifique, les systèmes d'application par épandage ou pulvérisation aériens sont généralement montés sur des avions, des tracteurs, des matériels au sol ou des chariots sur rails. Cependant, le résultat de l'entraînement des nuages de pulvérisation, c'est qu'une grande partie du produit pulvérisé peut être rendue inefficace en raison de l'impossibilité pour les particules pulvérisées de faible diamètre d'atteindre et de toucher la cible visée. Il est bien connu que la dimension des gouttelettes pulvérisées est un des principaux facteurs qui affectent l'entraînement. Si les fines gouttelettes permettent une meilleure couverture de la cible, elles sont également plus susceptibles d'être entraînées que les plus grosses. L'entraînement du nuage de pulvérisation représente une perte de produit chimique en dehors des cibles visées et constitue, par conséquent, un danger en matière de pollution de l'eau et de l'air. Etant donné que les produits chimiques qui se retrouvent en dehors de cibles sont des produits perdus et peuvent, quand il s'agit de pulvérisations agricoles, en particulier, représenter un risque pour les cultures environnantes, les alimentations en eau et le bétail, I'entraînement du nuage de pulvérisation constitue un problème en matière d'économie et d'environnement.

Les efforts de recherche entrepris en vue de réduire ledit entraînement ont généralement porté sur l'amélioration de la conception des équipements, à savoir la conception des buses pour optimiser la forme de la pulvérisation, ou sur les techniques d'application, telles que les pressions, hauteurs, formulations, etc. Les perfectionnements les plus prometteurs en ce qui concerne le domaine des techniques d'application ont porté sur la diminution des fines gouttelettes pulvérisées à l'intérieur du spectre de gouttelettes pendant l'atomisation par l'intermédiaire de modificateurs de pulvérisation appelés agents anti-entraînement. Les agents anti-entraînement efficaces doivent posséder un grand nombre de caractéristiques, car, ils doivent être en mesure d'augmenter la dimension des fines gouttelettes, être insensibles au cisaillement important qui se produit dans les pompes, buses, etc. des systèmes de pulvérisation, ne pas diminuer les effets biologiques des produits bioactifs pulvérisés, être compatibles avec les autres adjuvants pulvérisés, à savoir les produits n'ayant pas d'activité biologique ajoutés au mélange pulvérisé pour en améliorer les caractéristiques physiques ou chimiques, ne pas se démixer au repos, être faciles à mettre en oeuvre, ne pas porter atteinte à l'environnement et avoir un bon rapport rendement-prix.

Les agents anti-entraînement sont généralement des polymères de haut poids moléculaire qui, lorsqu'ils sont ajoutés à des systèmes aqueux, tendent à en augmenter la viscosité et à empêcher que l'eau ne soit divisée en un fin brouillard lorsqu'elle fait l'objet d'une pulvérisation ou d'un épandage dans l'air.

Lesdits polymères de haut poids moléculaire ont tendance à être instables et à se dégrader en vieillissant et ils sont très sensibles au vieillissement : ces deux conditions, lorsqu'elles surviennent, sont à l'origine d'une diminution de la viscosité de la solution qui provoque une diminution de l'activité anti-entraînement.

Les polymères caractéristiques que l'on utilise comme agents anti-entraînement sont les polyacrylamides visco-élastiques, les oxydes de polyéthylène, et les poly(vinyl pyrrolidones), les polyacrylamides constituant l'additif standard de l'industrie agricole que l'on ajoute dans le réservoir des pulvérisateurs pour réduire l'entraînement.

Cependant, les formulations courantes à base de polyacrylamide, destinées à maîtriser l'entraînement des produits pulvérisés ont une durée de réduction effective de l'entraînement très limitée, et ce, pour un certain nombre de raisons. Tout d'abord, les agents anti-entraînement à base de polyacrylamide de synthèse sont généralement répartis dans un véhiculeur à base de kérosène, ce qui en limite la dispersabilité et constitue, en outre, un problème de composant organique volatil pour l'utilisateur final. Les polymères eux-mêmes sont par essence non biodégradable. De plus, il faut utiliser des tensioactifs organiques inverseurs spécifiques pour qu'ils puissent s'hydrater et se disperser correctement dans l'eau.

Certains de ces polymères sont sensibles aussi à la qualité de l'eau. Il va de soi que tout ce qui précède nécessite l'utilisation de récipients en plastique (ou en verre), ce qui constitue un inconvénient majeur.

Enfin, et c'est peut-être ce qui est le plus important, ces polyacrylamides de synthèse de haut poids moléculaire sont extrêmement sensibles aux contraintes de cisaillement. Le cisaillement est provoqué par des gradients de pression élevés qui peuvent être imposés à un liquide par des appareils de contrôle des débits, les systèmes de mesure à turbine, les pompes et, d'une manière générale, les différentiels de pression supérieurs à environ 280 KPa que l'on rencontre communément dans les buses de pulvérisation et les systèmes d'épandage. Malheureusement, le cisaillement endommage les polymères visco-élastiques sensibles au cisaillement, tels que les polyacrylamides, par un phénomène connu sous le nom de dégradation physique par cisaillement. Cette dégradation du polymère provoque une diminution significative de la viscosité de la solution, ce qui se traduit par une réduction du contrôle de la distribution des dimensions des gouttelettes.

En résumé, les produits anti-entraînement à base de polyacrylamide possèdent plusieurs caractéristiques majeures qui ne contribuent pas à en rendre l'utilisation facile et l'efficacité fiable : hydratation lente, sensibilité à la qualité de l'eau et, ce qui est très important, sensibilité au cisaillement.

On a découvert que la gomme Guar et ses dérivés peuvent être utilisés dans un milieu de pulvérisation aqueux comme agents anti-entraînement qui, pour l'essentiel, ne présentent aucun des inconvénients précités que l'on associe aux polyacrylamides. Mis en oeuvre uniquement dans de l'eau en des quantités telles que les combinaisons guar/eau présentent un comportement de liquide newtonien, la gomme Guar et ses dérivés réduisent effectivement le nombre de gouttelettes inférieures à environ 150 µm, à savoir les gouttelettes qui, dans une très large mesure, sont responsables des problèmes d'entraînement, offrent une dispersion et une hydratation rapides dans l'eau et sont insensibles aux ions, c'est-à-dire qu'ils sont indépendants de la qualité de l'eau.

En plus d'être biodégradables, les gommes Guar, au départ, sont sèches et n'ont pas, par conséquent, tendance à se séparer durant le stockage et ne sont pas sensibles au gel. Aucun véhicule organique volatil n'est nécessaire ; on n'a pas besoin non plus de tensioactifs pour provoquer une hydratation rapide dans l'eau.

Les compositions à base de guar selon la présente invention possèdent non seulement les caractéristiques fort recherchées des agents anti-entraînement efficaces, mais conservent aussi lesdites propriétés dans des conditions prolongées de pulvérisation comportant un cisaillement important, c'est-à-dire que les compositions à base de guar selon la présente invention sont très résistantes au cisaillement et à la dégradation de l'effet anti-entraînement pour lequel elles sont utilisées.

L'essence même de la présente invention réside dans la découverte suivante, à savoir que de très faibles quantités de gomme Guar (de 0,075 à moins de 0,2 % en poids par unité de volume (p/v), d'un ou de plusieurs dérivés de guar non cationiques (de 0,075 à 0,275 % en poids/v, d'un ou de plusieurs guars cationiques (de 0,05 à 0,1 % en poids/v) ou de leurs combinaisons, mises en oeuvre dans des compositions aqueuses pour pulvérisation ou épandage à la dilution finale (composition finale de pulvérisation) ont une action extrêmement efficace comme agents anti-entraînement qui, le hasard faisant bien les choses, manifestent dans ce domaine de faibles concentrations un comportement de liquide newtonien, c'est-à-dire qu'ils ne sont pas sensibles au cisaillement. Ces domaines de concentrations sont bien inférieurs à ceux qui ont été décrits antérieurement (généralement supérieurs à 0,6 % en poids/v), car leur mise en oeuvre dans les compositions aqueuses de l'état antérieur de la technique était la reconnaissance des caractéristiques de la gomme Guar et de ses dérivés, à savoir leur aptitude à agir comme lubrifiants, liants, épaississants ou agents de suspension.

La gomme Guar est l'endosperme raffiné d'une graine de légumineuse, le Cyamopsis tetragonolobus (L.) Taub. qui est une plante qui, physiquement, ressemble au soja. La gomme est un colloïde végétal alimentaire pur qui est reconnu depuis de nombreuses années par les industries de formulations agricoles, chimiques et alimentaires pour avoir d'excellentes propriétés comme agent épaississant, filmogène et stabilisant.

La gomme Guar est souvent utilisée dans les produits alimentaires comme épaississant et liant de l'eau libre. Dans les sauces pour les salades, la gomme Guar augmente la viscosité de l'émulsion et réduit la vitesse de séparation. Etant donné que la gomme Guar sert à fixer l'eau libre, on l'utilise pour stabiliser les produits alimentaires, telles que les crèmes glacées, par inhibition de la formation de cristaux de glace. La gomme Guar est employée aussi pour stabiliser certaines émulsions non alimentaires fragiles, tels que les mélanges 1 : 1 d'eau et d'huile minérale.

La gomme Guar s'est révélée utile comme lubrifiant ; non seulement elle facilite les extrusions en douceur à de faibles pressions, mais l'addition de petites quantités de gomme Guar a eu pour résultat de réduire jusqu'à 50 % les chutes de pression par friction dans les conduites d'eau de process, augmentant ainsi la durée de vie des pompes et les capacités tout en diminuant les besoins en puissance.

JP-A-02096503 décrit une composition comprenant une majeure partie d'eau et 0,01 à 2,0% en poids de gomme Guar ainsi qu'un agent actif algicide et bactéricide.

JP-A-56113707 décrit une solution aqueuse contenant 0,1 à 10% en poids de gomme Guar.

EP-A-0249728 décrit une composition contenant de 0,05 à 0,5% en poids d'un agent épaississant et un agent pesticide dans une suspension aqueuse. L'agent épaississant peut être la gomme Guar.

Vue sous l'angle fonctionnel, la gomme Guar est un polysaccharide non ionique qui gonfle dans l'eau froide, développe et maintient ses propriétés dans un large intervalle de pH. Ce polysaccharide est un hydrate de carbone polymère complexe constitué essentiellement d'une chaîne linéaire de motifs mannose comportant des branches galactose à chaînon unique ; il appartient à la classe chimique des polygalactomannanes.

Les solutions de gomme Guar sont préparées tout simplement en tamisant et incorporant la gomme sèche dans une cuve d'eau vigoureusement agitée et en laissant la gomme s'hydrater. Pour raccourcir le temps d'hydratation, on peut augmenter la température de l'eau tant que le polymère n'est pas dégradé par un chauffage prolongé ou excessif.

Aux concentrations mises en oeuvre dans la présente invention, les solutions de gomme Guar ont un rendement égal à zéro, c'est-à-dire qu'elles commencent à couler dès le moindre cisaillement.

La nature de la gomme Guar permet d'obtenir une viscosité presque constante pour une concentration donnée dans l'intervalle de pH compris entre 3 et 10. Au dessus de pH 11, on observe une viscosité plus faible qui résulte de la diminution de l'aptitude de la gomme à s'hydrater. L'intervalle d'hydratation optimale se situe entre pH 5 et pH 8. Cette compatibilité inhabituelle de la gomme Guar dans l'intervalle compris entre pH 3 et pH 10 est attribuée à la nature non ionique de la molécule.

Les réactions d'éthérification et d'estérification se font sur les fonctions hydroxyle de la gomme Guar. L'hydroxyle sur l'atome de carbone est la position la plus réactive pour l'éthérification, par exemple, avec l'oxyde de propylène, mais les hydroxyles secondaires constituent aussi des sites vraisemblables.

Les réactions d'éthérification de principe sont la carboxyméthylation par l'intermédiaire de l'acide monochloracétique, l'hydroxyalkylation par l'intermédiaire de l'oxyde d'éthylène ou de l'oxyde de propylène et quaternisation à l'aide de divers composés d'amines quaternaires comportant des sites époxyde ou chlorure réactifs. Les sites anioniques et cationiques modifient la façon dont la molécule de gomme Guar interagit avec les sels minéraux, les surfaces cellulosiques et minérales hydratées et les particules organiques.

En règle générale, les hydroxyalkyl éthers de polygalactomannanes sont obtenus en faisant réagir les polygalactomannanes avec des oxydes d'alkylène dans des conditions basiques. Dans les brevets US-A 3 723 408 et 3 723 409, on fait réagir la farine de guar avec des oxydes d'alkylène en présence d'eau et d'hydroxyde de sodium. Le produit de la réaction est ensuite neutralisé avec un acide, lavé avec un mélange d'alcool et d'eau, puis séché et broyé. Dans le brevet US-A 3 483 121, on fait réagir les polygalactomannanes et les oxydes d'alkylène dans des conditions basiques avec de faibles quantités d'eau et des quantités plus importantes de solvants organiques miscibles ou immiscibles à l'eau.

Les agents d'hydroxyalkylation spécifiques comprennent l'oxyde d'éthylène, l'oxyde-1,2 de propylène, l'oxyde-1,2 de butylène, l'oxyde-1,2 d'hexylène, la chlorohydrine d'éthylène, la chlorohydrine de propylène et l'épichlorohydrine.

L'hydroxypropylation accroît la solubilité de la gomme et donne un produit qui s'hydrate rapidement, quelle que soit la température de l'eau. Les dérivés hydroxyalkylés sont plus tolérants à l'égard des solvants miscibles à l'eau et peuvent, par conséquent, gonfler et développer une viscosité dans les solutions aqueuses contenant des solvants organiques de faible poids moléculaire, tels que le méthanol, l'éthanol, etc.

Les dérivés hydroxyalkylés et carboxyméthylés donnent d'une manière générales des solutions qui sont plus limpides que la gomme Guar normale et les dérivés hydroxyalkylés résistent mieux également à la dégradation thermique que la gomme Guar normale. La gomme Guar hydroxypropylée est utilisée notamment comme agent modificateur d'écoulement et agent réducteur de friction qui ne flocule les matières solides.

Les carboxyalkyl éthers et les carboxyhydroxyalkyl éthers mixtes de polygalactomannanes sont décrits respectivement dans les brevets US-A 3 740 388 et 3 723 409. Ces dérivés sont obtenus en faisant réagir le polygalactomannane avec les agents de dérivatisation (acide gras halogéné et oxyde d'alkylène) dans un mélange d'eau et d'alcool et en procédant ensuite à un lavage avec des mélanges d'eau et d'alcool.

Les agents de carboxyalkylation spécifiques comprennent l'acide chloracétique, l'acide chloropropionique et l'acide acrylique.

La carboxyméthylation introduit une fonction anionique dans la chaîne polymère et accroît la solubilité de la gomme Guar.

La gomme Guar carboxyméthyl hydroxypropylée a une capacité exceptionnelle à mettre en suspension les solides non dissous.

D'autres dérivés des polygalactomannanes sont décrits dans des brevets, tels que les brevets US-A 2 461 502 (cyanoéthyl éthers), US-A 4 094 795 (dialkylacrylamide éthers) et US-A 3 498 912 (alkyl éthers d'ammonium quaternaire). Dans les procédés décrits, les réactions se font dans des mélanges d'eau et de solvant organique et les produits des réactions sont lavés avec des solvants et des mélanges eau-solvant.

Les agents d'alkylation spécifiques à base d'ammonium quaternaire sont des agents, tels que le chlorure de 2,3-époxypropyl triméthylammonium, le chlorure de 3-chloro-2-hydroxypropyl triméthylammonium et autres similaires.

D'autres agents susceptibles de réagir avec les groupes hydroxy des polygalactomannanes pour former des groupes éther sont, par exemple, les agents d'alkylation qui comprennent le chlorure de méthyle, le bromure de méthyle, le chlorure d'éthyle, l'iodure d'éthyle et le chlorure d'isopropyle, les agents d'aminoalkylation, tels que le chlorure d'aminoéthyle, le bromure d'aminopropyl et le chlorure de N,N-diméthylaminopropyle, les agents qui contiennent un groupe à insaturation éthylénique et qui réagissent par addition de Michael avec les groupes hydroxy, tels que l'acrylamide, la méthacrylamide, l'acrylonitrile, le méthacrylonitrile, l'acide acrylique, l'acrylate de sodium et, en fait, tout monomère polymérisable comportant un groupe polymérisable à insaturation éthylénique.

Par "dérivé de la gomme Guar", on entend ici tout produit dérivé de la gomme Guar décrit plus haut.

La gomme Guar qui dérive d'une ressource renouvelable fixant l'azote est un polymère polyvalent, sans danger pour l'environnement et hautement biodégradable. Les dérivés de la gomme Guar sont légèrement moins sensibles à la dégradation biologique étant donné que leurs molécules conviennent moins bien comme aliment pour les organismes communs.

Les compositions aqueuses pour pulvérisations selon la présente invention sont des compositions dont l'eau constitue le composant principal, à savoir supérieur à 5 0 % en poids. Les compositions aqueuses industrielles pour pulvérisations contiennent, en plus de la gomme Guar et des dérivés de la gomme Guar selon la présente invention, au moins un composé chimique réactif. Dans le domaine agricole, ce composé est généralement un pesticide bioactif. La composition aqueuse pour pulvérisation à base de gomme Guar peut contenir d'autres adjuvants, tels que de faibles quantités, par exemple, d'agents de tamponnage, d'anti-mousse, de tensioactifs, de mouillants, d'agents adhésifs, de produits de nettoyage pour les cuves et d'autres additifs bien connus dans ce domaine.

Par "pulvérisation et épandage aériens" on entend le procédé de pulvérisation ou d'épandage mis en oeuvre avec les systèmes d'épandage du commerce généralement installés sur des avions, des tracteurs, des matériels au sol ou des chariots sur rails et non pas les procédés dans lesquels l'entraînement ne pose pas de problèmes, c'est-à-dire les systèmes totalement fermés, tels que les séchoirs par pulvérisation, ou les procédés d'application à la main par le consommateur qui utilisent une faible pression et un faible cisaillement, tels que ceux mis en oeuvre avec des arrosoirs.

Pour maîtriser effectivement la réduction de l'entraînement des compositions aqueuses, il faut que les effets produits par l'agent anti-entraînement soient prévisibles et constants, c'est-à-dire que les effets ne doivent pas changer au cours du temps et en fonction des conditions de cisaillement.

Les études effectuées sur les spectres de gouttelettes dans l'air produits par des buses de pulvérisation, notamment ceux produits par la plupart des buses agricoles reposent de plus en plus sur des systèmes laser. Les études des nuages de pulvérisation selon la présente invention utilisent le système laser PDPA-100 de la société Aerometrics Inc. qui permet de déterminer les spectres de gouttelettes dans le temps. Le domaine de dimensions des gouttelettes du PDPA (environ 35 fois) est suffisant pour couvrir les spectres de gouttelettes produits par les appareils et les conditions de traitement utilisés dans notre étude, à savoir buses à jet plat de type agricole permettant d'atomiser des formulations agricoles classiques à des pressions normales. La méthologie utilisée est conforme aux normes GLP.

En règle générale, on introduit les composés dans trente (30) litres d'eau à 26°C, puis on recycle et atomise à l'aide d'une buse Teejet® XR8003VS à 280 KPa. La première mesure d'atomisation est effectuée après environ deux minutes de recyclage, les mesures suivantes étant effectuées à des intervalles de 3-4 minutes. on prend une seule traversée du nuage de pulvérisation dans l'axe des X. Le temps de traversée est ajusté de façon à compter au moins 10 000 gouttes ; dans la plupart des cas, on est plus près de 20 000.

Les diamètres mesurés des gouttelettes contenues dans les sprectres de pulvérisation sont compris entre une taille maximum de l'ordre de 800 µm et une taille minimum de l'ordre de 20 µm.

On admet généralement que les dimensions des gouttelettes de pulvérisation qui sont le plus susceptibles d'être entraînées sont celles qui sont inférieures à environ 150 µm. Le domaine préférentiel des diamètres des gouttelettes contenues dans les pulvérisations aériennes du commerce est compris entre environ 200 µm et environ 500 µm.

On pulvérise un certain nombre de formulations avec et sans adjuvants anti-entraînement. Dans nos tests, l'eau est utilisée comme étalon, car nombreuses sont les formulations, notamment celles contenant des poudres mouillables, qui s'atomisent de la même façon que l'eau sans adjuvants.

Les données concernant la distribution des fréquences de gouttelettes produites par des buses, notamment des buses agricoles, ont tendance à prendre la forme d'une distribution normale logarithmique approximative déviée. Les deux termes les plus communément utilisés pour décrire les distributions en question sont le Diamètre Médian par référence au Volume (Dvo) et le Diamètre Médian par référence au Nombre (DMN), à savoir les diamètres au-dessous desquels 50 % du volume total et du nombre total de gouttes de liquide pulvérisé se trouvent respectivement dans des gouttes de diamètre plus petit.

%V représente la proportion du volume du nuage de pulvérisation et %N la proportion du nombre de gouttes contenues dans des intervalles de dimensions donnés (au-dessus/au-dessous).

Point 10 % (Pnt 10 %) et point 90 % (Pnt 90 %) représentent la dimension des gouttes au-dessous de laquelle se trouvent respectivement 10 % et 90 % du volume des gouttes mesurées.

L'entraînement qui se produit lors des pulvérisations aériennes, notamment des pulvérisations liées à l'industrie agricole, représente une part importante du gaspillage inhérent aux applications par pulvérisation et de l'impact qu'elles ont sur les préoccupations en matière de santé publique et les coûts en matière d'environnement. Etant donné qu'il est improbable que l'on puisse à court terme améliorer de façon significative le matériel de pulvérisation, les modificateurs selon la présente invention sont particulièrement précieux pour pallier les préoccupations précitées et peuvent, potentiellement, allonger la durée de vie à la fois des nouvelles substances chimiques actives et de celles qui existent déjà, notamment des pesticides bioactifs de l'industrie phytosanitaire.

Les exemples suivants permettent d'illustrer l'invention et ne doivent en aucun cas être interprétés de façon à en limiter la portée. Sauf indication contraire, toutes les parties et pourcentages indiqués s'entendent en poids par rapport au volume final du produit.

### EXEMPLE 1

Les résultats ci-après ont été obtenus dans le cadre d'une série d'études comparatives vitesse d'hydratation/mélange, effectuées avec un agent anti-entraînement standard de l'industrie à base de polyacrylamide et deux dérivés de la gomme Guar, à savoir une gomme Guar hydroxypropylée et une gomme Guar carboxy méthyl hydroxypropylée.

On introduit les polymères dans une cuve de pulvérisation de quarante-cinq (45) litres contenant trente (30) litres d'eau du robinet. On introduit les dérivés de gomme Guar en poudre en les tapottant légèrement au-dessus de la surface de l'eau, là où le liquide de recyclage revient de la pompe. On ajoute le polyacrylamide dans la même zone à l'aide d'une seringue de vingt (20) millilitres. On agite brièvement à la main à l'aide d'une baguette d'agitation.

On atomise les mélanges dès qu'il sont terminés (au bout de deux minutes environ), c'est-à-dire lorsque la majeure partie de la matière solide a disparu. Le début de l'atomisation est considéré comme étant le temps zéro. Le liquide est recyclé sans limitation de pression, c'est-à-dire que le produit est recyclé librement par la pompe, sauf pendant la pulvérisation pour simuler le mélange dans une cuve en plein champ. Les données relatives aux spectres de gouttelettes sont obtenues par une mesure effectuée pendant une seule traversée de quatre-vingt-dix (90) secondes dans l'axe de la longueur du nuage de pulvérisation à chaque intervalle hydratation/mélange. Les intervalles mis en oeuvre sont de 5, 30 et 60 minutes. On ajoute tous les mélanges de gomme Guar de façon à obtenir une concentration de 0,1% en poids par unité de volume et le polyacrylamide de façon à ce que la concentration soit de 0,0625 % en volume par unité de volume et ce, pour que les viscosités soient comparables. La température du liquide est de 25°C ± 2°C. Les résultats donnés dans les exemples sont exprimés en microns (µm).

**TABLEAU I**

| ETUDE HYDRATATION/MELANGE NALCOTROL II(i) | | | | |
|---|---|---|---|---|
| TEMPS D'HYDRATATION (mn) | Pnt 10% | DMN | %V<100 µm^{(iv)} | %V<150 µm |
| 5 | 211,3 | 53,7 | 1,85 | 4,72 |
| 30 | 202,4 | 48,5 | 2,00 | 5,05 |
| 60 | 175,4 | 47,9 | 2,75 | 7,03 |

| JAGUAR 8000 (ii) | | | | |
|---|---|---|---|---|
| TEMPS D'HYDRATATION (mn) | Pnt 10% | DMN | %V<100 µm | %V<150 µm |
| 5 | 203,3 | 43,8 | 2,36 | 5,43 |
| 30 | 214,3 | 44,0 | 1,89 | 4,56 |
| 60 | 194,4 | 43,8 | 2,41 | 5,68 |

| JAGUAR 8600(iii) | | | | |
|---|---|---|---|---|
| TEMPS D'HYDRATATION (mn) | Pnt 10% | DMN | %V<100 µm | %V<150 µm |
| 5 | 201,8 | 41,9 | 2,41 | 5,52 |
| 30 | 198,9 | 41,2 | 2,49 | 5,73 |
| 60 | 190,0 | 41,8 | 2,70 | 6,27 |

| | | | | |
|---|---|---|---|---|
| (i) NALCOTROL Il est le nom commercial du polyacrylamide non ionique de poids moléculaire élevé de la société Nalco Chemical Co. | | | | |
| (ii) JAGUAR 8000 est le nom commercial de la gomme Guar 0,4 ms-hydroxypropylée de Rhône-Poulenc Inc. | | | | |
| (iii) JAGUAR 8600 est le nom commercial de la gomme Guar carboxyméthy hydroxypropylée de Rhône-Poulenc Inc. | | | | |
| (iv) L'eau présente normalement 6-7 % en volume de gouttelettes ayant un diamètre inférieur à 100 µm lorsque les mesures sont effectuées de la même façon. | | | | |

Les résultats ci-dessus montrent que les dérivés de la gomme Guar à la concentration de 0,1 % dans l'eau sont extrêmement efficaces pour réduire le nombre des particules ayant un diamètre inférieur à 150 µm et, par conséquent, le volume de pulvérisation correspondant. Les effets initiaux sont comparables à ceux obtenus avec un produit agricole standard de l'industrie à base de polyacrylamide, cependant, l'efficacité des dérivés de la gomme Guar ne diminue pas dans le temps comme on put l'observer facilement avec le polyacrylamide. Bien que le polyacrylamide réduise à 4,72 %, au bout de cinq minutes, le volume du liquide dont les gouttes ont un diamètre inférieur à 150 µm, son efficacité, cinquante-cinq minutes plus tard, se détériore de façon significative, c'est-à-dire jusqu'au point où le volume des gouttes de diamètre inférieur à 150 µm monte à 7,03 %.

### EXEMPLE II

Les résultats ci-après ont été obtenus dans le cadre d'une étude effectuée pour examiner l'effet que produit un cisaillement important, tel que celui que l'on rencontre en plein champ, sur les agents anti-entraînement selon la présente invention. On utilise deux témoins, à savoir un polyacrylamide et l'eau.

On introduit les polymères dans la cuve de pulvérisation comme pour les études hydratation/mélange de l'Exemple I. Avant de commencer l'atomisation (temps zéro), on laisse les mélanges se recycler librement (pas de limitation de pression) pendant deux minutes et, ensuite, ils sont recyclés avec limitation continue de pression pour simuler le recyclage dans la cuve en plein champ pendant que l'on pulvérise.

Les données concernant les spectres des dimensions des gouttelettes sont obtenues pendant une seule traversée (90 secondes) dans l'axe de la longueur du nuage de pulvérisation. Ensuite, la buse est ramenée au point de départ (60 secondes), les lignes sont exemptes de toute formulation (15 secondes) et l'on procède à une nouvelle traversée. Cela donne plus ou moins un intervalle de trois minutes entre les mesures et, ce qui est essentiel, une contrainte de cisaillement continue. On continue jusqu'à atomisation complète des 30 litres ou jusqu'à ce qu'il reste moins d'un litre dans la cuve. Les mesures indiquées ci-après ont été enregistrées approximativement au bout de 3, 12, 24 et 35 minutes. La pompe à piston utilisée pour les essais a un débit approximatif de 6,7/mn dans limitation de pression, 4,6 l/mn pendant la pulvérisation à 276 pa. (40 psi) et 6 l/mn avec limitation, mais sans pulvérisation.

**TABLEAU II**

| NALCOTROL II | | | | | | |
|---|---|---|---|---|---|---|
| TEMPS DE RECYCLAGE (mn) | Pnt 10 % | Pnt 90 % | Dᵥₒ | DMN | %V<100 | %V<150 |
| EAU (TEMOIN) | 119,8 | 418,3 | 250,3 | 54,7 | 6,69 | 16,64 |
| 2,97 | 204,6 | 746,4 | 428,0 | 50,5 | 1,96 | 4,76 |
| 11,77 | 169,2 | 617,9 | 368,2 | 48,3 | 3,14 | 7,70 |
| 23,57 | 135,8 | 519,4 | 293,5 | 53,8 | 4,81 | 12,71 |
| 35,26 | 127,2 | 454,5 | 278,8 | 58,8 | 5,54 | 14,62 |

| JAGUAR 8000 | | | | | | |
|---|---|---|---|---|---|---|
| TEMPS DE RECYCLAGE (mn) | Pnt 10 % | Pnt 90 % | Dᵥₒ | DMN | %V<100 | %V<150 |
| 2,90 | 176,8 | 713,4 | 391,4 | 38,6 | 3,19 | 7,22 |
| 11,60 | 159,0 | 719,8 | 400,8 | 40,9 | 2,25 | 5,47 |
| 23,38 | 192,7 | 689,9 | 386,3 | 40,3 | 2,51 | 6,09 |
| 35,35 | 189,5 | 800,6 | 409,9 | 39,3 | 2,61 | 5,98 |

| JAGUAR 8600 | | | | | | |
|---|---|---|---|---|---|---|
| TEMPS DE RECYCLAGE (mn) | Pnt 10 % | Pnt 90 % | Dᵥₒ | DMN | %V<100 | %V<150 |
| 2,83 | 212,8 | 787,1 | 424,0 | 39,7 | 2,05 | 4,71 |
| 11,38 | 209,9 | 752,4 | 417,2 | 38,6 | 2,17 | 4,99 |
| 23,07 | 209,7 | 792,4 | 426,3 | 38,8 | 2,23 | 5,05 |
| 34,72 | 177,1 | 698,4 | 375,6 | 39,3 | 2,83 | 6,93 |

Il ressort des résultats ci-dessus que l'agent anti-entraînement à base de polyacrylamide est sensible d'une manière tout à fait significative au cisaillement dans le temps. Le Diamètre Médian par référence au Volume (Dᵥₒ), à savoir la dimension des gouttelettes au-dessous de laquelle 50 % du volume est contenu dans des gouttes plus petites, est, au départ, plutôt élevé pour le polyacrylamide (428 µm), mais chute rapidement au-dessous de 280 µm alors que la gomme Guar hydroxypropylée commence à un niveau élevé et augmente même légèrement dans le temps en passant d'environ 881 à environ 410 µm. La gomme Guar carboxyméthyl hydroxypropylée commence haut et se maintient à un niveau relativement constant à 424 µm (avec une légère diminution à 376 au bout de 35 minutes). Ce qui est important, c'est que les données montrent que, au bout d'environ 35 minutes et contrairement à l'agent anti-entraînement à base de polyacrylamide, le pourcentage en volume de la composition de pulvérisation contenu dans les gouttelettes de dimensions susceptibles d'être entraînées, à savoir les gouttelettes de dérivés de la gomme Guar < 100 µm et < 150 µm, n'est pas significativement différent de ce qu'il était après trois minutes. Le polyacrylamide subit une diminution significative de son efficacité durant la même période de temps.

### EXEMPLE III

Les résultats suivants ont été obtenus dans le cadre d'études comparatives de cisaillement important entre une gomme Guar hydroxypropylée et d'autres gommes Guar, à savoir une gomme Guar 1,2 ms hydroxypropylée, de la gomme Guar et une gomme chlorure d'hydroxypropyl ammonium Guar.

Les conditions et façons de procéder du test sont identiques à celles mises en oeuvre dans les études de recyclage à cisaillement important de l'Exemple II.

**TABLEAU III**

| JAGUAR 8000 | | | | | | |
|---|---|---|---|---|---|---|
| TEMPS(mn) | Pnt 10 % | Pnt 90 % | DMV | DMN | %V<100 | %V<150 |
| Eau Témoin | 119,4 | 392,8 | 250,1 | 40,3 | 6,90 | 16,10 |
| 3,67 | 237,1 | 785,9 | 475,4 | 38,5 | 1,59 | 3,53 |
| 13,85 | 230,0 | 812,0 | 430,6 | 40,0 | 1,60 | 3,65 |
| 24,08 | 230,0 | 778,4 | 430,3 | 38,6 | 1,65 | 3,71 |
| 37,73 | 224,6 | 813,2 | 432,6 | 36,8 | 1,85 | 4,28 |

| JAGUAR 8012 (i) | | | | | | |
|---|---|---|---|---|---|---|
| TEMPS (mn) | Pnt 10% | Pnt 90 % | DMV | DMN | %V<100 | %V<150 |
| Eau Témoin | 125,5 | 388,5 | 260,5 | 42,7 | 6,17 | 14,29 |
| 5,03 | 183,6 | 608,2 | 370,1 | 45,7 | 2,59 | 6,36 |
| 15,43 | 187,8 | 638,7 | 373,9 | 43,7 | 2,53 | 6,10 |
| 25,75 | 186,1 | 706,3 | 369,6 | 48,2 | 2,48 | 6,16 |
| 39,42 | 177,3 | 602,3 | 361,8 | 42,7 | 2,84 | 6,83 |

| JAGUAR 2610 (ii) | | | | | | |
|---|---|---|---|---|---|---|
| TEMPS(mn) | Pnt 10 % | Pnt 90% | DMV | DMN | %V<100 | %V<150 |
| Eau Témoin | 126,3 | 392,4 | 256,6 | 40,7 | 6,18 | 14,46 |
| 3,43 | 194,6 | 700,4 | 383,6 | 36,5 | 2,56 | 5,58 |
| 13,62 | 192,2 | 625,5 | 381,4 | 37,7 | 2,63 | 5,96 |
| 24,13 | 191,7 | 656,3 | 380,4 | 37,0 | 2,62 | 5,91 |
| 38,00 | 181,4 | 687,1 | 374,2 | 35,9 | 3,02 | 6,65 |

| JAGUAR C-13S (iii) | | | | | | |
|---|---|---|---|---|---|---|
| TEMPS (mn) | Pnt 10 % | Pnt 90 % | DMV | DMN | %V<100 | %V<150 |
| Eau Témoin | 123,2 | 401,4 | 259,5 | 42,3 | 6,38 | 14,99 |
| 3,52 | 187,5 | 624,0 | 371,0 | 35,7 | 2,75 | 6,28 |
| 13,83 | 182,4 | 604,5 | 362,4 | 36,0 | 3,00 | 6,59 |
| 24,17 | 183,8 | 667,3 | 369,6 | 36,0 | 2,92 | 6,52 |
| 38,02 | 187,8 | 670,2 | 373,0 | 38,1 | 2,89 | 6,37 |

| | | | | | | |
|---|---|---|---|---|---|---|
| (i) JAGUAR 8012 est le nom commercial de la gomme Guar 1,2ms hydroxypropylée vendue par Rhône-Poulenc Inc. | | | | | | |
| (ii) JAGUAR 2610 est le nom commercial de la gomme Guar non modifiée vendue par Rhône-Poulenc Inc. | | | | | | |
| (iii) JAGUAR C-13S est le nom commercial de la gomme chlorure d'hydroxypropyl trimonium Guar vendue par Rhône-Poulenc Inc. | | | | | | |

Les résultats ci-dessus confirment l'efficacité et la maîtrise à peu près constante de l'entraînement des gouttelettes, à savoir celles dont le diamètre est inférieur à 150 µm, obtenues, que l'on obtient avec la gomme Guar et les dérivés de la gomme Guar dans des conditions prolongées de recyclage avec cisaillement important.

### EXEMPLE IV

On effectue une étude en soufflerie dans le Centre de Long Ashton Research Station à Bristol, Angleterre, afin de déterminer l'effet du cisaillement provoqué par la pompe sur le mouvement sous le vent, à savoir l'entraînement d'un mélange pulvérisé contenant 0,1 % en poids/v de JAGUAR 8000 dans l'eau et un mélange pulvérisé contenant 0,0625 % en volume/v de NALCOTROL II dans l'eau, par comparaison avec l'eau ci-dessus.

La soufflerie fait 4 m de largeur, 4 m de hauteur et 12 m de longueur avec une portée efficace de 9 m ; elle abrite un pulvérisateur sur rails Mardrive capable de manoeuvrer un bras équipé de 5 buses (espacées de 50 cm), le bras se déplaçant à une vitesse pouvant atteindre 20 km/h. Un ventilateur axial de 3 m de diamètre, monté horizontalement, extrait l'air du tunnel à des vitesses pouvant aller jusqu'à 8 m/sec. Le courant d'air est à peu près laminaire au centre sur 3 m de largeur. La température et l'humidité relative ne peuvent pas être contrôlées. Le plancher de la soufflerie est couvert de bacs de chaumes servant de culture artificielle.

Pour obtenir les chaumes, on a semé dans des bacs de 60 cm x 40 cm du blé d'hiver que l'on a fait pousser dehors. Peu de temps avant d'étêter le blé, on l'a pulvérisé avec du paraquat et coupé à une hauteur d'environ 28 cm au-dessus du sol. Pour les bords de la soufflerie, on a utilisé des chaumes de moindre hauteur (24 cm) comme rangées de protection.

On ajoute les polymères à l'eau du robinet et on pulvérise à l'aide d'une buse statique de Teejet® XR8003VS à 276 Pa. (40 psi), montée à 45 cm au-dessus de la hauteur de la "culture". On pulvérise la moitié de chaque mélange à l'aide d'un récipient sous pression, c'est-à-dire sans cisaillement et l'autre moitié est soumise à 10 minutes de recyclage à l'aide d'une petite pompe à piston avant de procéder à la pulvérisation. On ajoute un traceur fluorescent à base de fluorescéine aux solutions pulvérisées à raison de 0,05 % en poids/v.

On mesure l'entraînement à un seul endroit, sous le vent à 5 m du bras et des buses, à cinq hauteurs différentes (0 : hauteur de la culture, 10, 28, 45 et 55 cm au-dessus de la culture). On utilise deux vitesses nominales de vent : 2 et 4 m/sec. Toutes les applications sont répétées trois fois.

On extrait dans 0,05 M de NaOH contenant 0,05% de Triton X100 les dépôts qui se sont formés sur le cordon des collecteurs fournis par WRK Inc., Manhattan Ks 66502. On détermine la fluorescence dans un délai d'une heure après avoir recueilli les dépôts en utilisant un spectrophotomètre de fluorescence Perkin-Elmer® LS-2B (cellule d'écoulement et pompe péristaltique). On détermine les quantités de produit fluorescent à l'aide de courbes d'étalonnage normalisées obtenues à partir de solutions types fraîches.

La quantité entraînée dans chaque traitement et pour chacune des hauteurs est exprimée en µg/g de traceur appliqué. Les résultats peuvent donc être rapportés à la "matière active" appliquée, quel que soit le volume appliqué. Le Tableau IV donne un résumé des résultats obtenus.

### EXEMPLE IV

| Entraînement du traceur (µg/g de traceur appliqué) Vitesse nominale du vent : 2m/sec. | | | | | |
|---|---|---|---|---|---|
| cm au-dessus de la hauteur de la culture | 55 | 45 | 28 | 10 | 0 |
| Eau | 0,296 | 0,779 | 2,350 | 3,874 | 4,211 |
| Nalcotrol II Récipient sous pression | 0,091 | 0,220 | 0,678 | 1,103 | 1,152 |
| Nalcotrol II avec cisaillement | 0,160 | 0,396 | 1,250 | 2,073 | 2,289 |
| JAGUAR 8000 Récipient sous pression | 0,091 | 0,206 | 0,770 | 1,365 | 1,555 |
| JAGUAR avec cisaillement | 0,080 | 0,206 | 0,749 | 1,372 | 1,522 |

| Vitesse nominale du vent : 4 m/sec. | | | | | |
|---|---|---|---|---|---|
| cm au-dessus de la hauteur de la culture | 55 | 45 | 28 | 10 | 0 |
| Eau | 0,370 | 2,029 | 16,899 | 44,227 | 54,440 |
| Nalcotrol II Récipient sous pression | 0,157 | 0,882 | 8,181 | 18,685 | 21,404 |
| Nalcotrol II avec cisaillement | 0,147 | 0,818 | 13,471 | 37,125 | 47,656 |
| JAGUAR 8000 Récipient sous pression | 0,109 | 0,494 | 7,181 | 19,975 | 22,410 |
| JAGUAR avec cisaillement | 0,076 | 0,493 | 7,286 | 21,025 | 23,576 |

A la "hauteur de la culture" et à la vitesse nominale du vent de 2 m/sec., le JAGUAR 8000, qu'il soit cisaillé ou non, réduit l'entraînement d'environ 64 % tandis que le Nalcotrol II cisaillé ne réduit l'entraînement que d'environ 45 %.

A la vitesse nominale du vent de 4 m/sec. il n'y a, pour l'essentiel, aucune différence entre les mélanges contenant le JAGUAR 8000 cisaillé et non cisaillé et le Nalcotrol II non cisaillé, l'effet de réduction étant de l'ordre de 60 %. Cependant, le polyacrylamide Nalcotrol II cisaillé est presque autant entraîné que l'eau seule.

Ainsi donc, ces résultats d'une étude simulée en plein champ montrent qu'un dérivé de la gomme Guar, qu'il soit cisaillé ou non, peut réduire l'entraînement d'une manière aussi efficace qu'un produit standard anti-entraînement non cisaillé à base de polyacrylamide. De plus, le dérivé de la gomme Guar, qu'il soit cisaillé ou non, peut réduire l'entraînement d'une manière significative par rapport à un produit standard anti-entraînement cisaillé à base de polyacrylamide.

### EXEMPLE V

On teste dans les conditions de l'Exemple II des compositions aqueuses contenant seize (16) produits anti-antraînement supplémentaires du commerce. Etant donné que le JAGUAR® 8000 et le Nalcotrol® II donnent des viscosités de 2,4 cP aux concentrations utilisées dans nos tests, on a déterminé la concentration nécessaire de chacun des produits testés pour obtenir approximativement la même viscosité. Les produits comprennent des polymères solubles à la fois dans l'eau froide et dans l'eau chaude.

Toutes les mesures de viscosité effectuées dans les Exemples ont été réalisées avec le viscosimètre Contraves Low Shear 40® (LS40). La température est maintenue à 25°C à l'aide d'un bain-marie à flux circulant. Le LS40 met en oeuvre la géométrie de Couette ("cup and bob") et pour les mesures on utilise la norme DIN 412. Les produits choisis ainsi que leurs concentrations sont indiqués dans le Tableau Va.

**TABLEAU Va**

| Nom commercial | Description | Fournisseur | Conc. | Test Viscosité (cP) |
|---|---|---|---|---|
| JAGUAR® 8000 | Gomme Guar HP | RPI | 0,10 | 2,1 |
| Nalcotrol® II | Polyacrylamide | Nalco | 0,0625 | 2,4 |
| SeaSpen PF® | Carraghénane | FMC | 0,05 | 2,4 |
| Viscarin GP 209® | Carraghénane | FMC | 0,05 | 5,1 |
| Viscarin SD 389® | Carraghénane | FMC | 0,075 | 3,2 |
| Klucel® M | Cellulose HP | Aqualon | 0,10 | 2,2 |
| Gomme de cellulose | Na CM cellulose | Aqualon | 0,10 | 3,4 |
| Cellulose Gum® 250 MR | Cellulose HE | Aqualon | 0,17 | 2,5 |
| Pemulen® TR-1 | Copolymère acrylique | Goodrich | 0,125 | 2,1 |
| Gomme arabique tech. | | AEP Colloids | 3,10 | 2,3 |
| Gomme de caroube | | Meer | 2,20 | 2,3 |
| Gomme tragacanth | | Meer | 0,10 | 1,9 |
| Polyox 301 | Oxyde de polyéthylène | U. Carbide | 0,12 | 2,4 |
| Polyox Coagulant | Oxyde de polyéthylène | U. Carbide | 0,07 | 2,5 |
| K9A50 | Gomme Gellan | Kelco | 0,07 | 2,1 |
| K1A96 | Gomme Whelan | Kelco | 0,025 | 2,6 |
| K1A112 | Gomme Rhamsan | Kelco | 0,012 | 2,2 |
| Luviskol K90 | Polyvinyl pyrrolidone | BASF | 0,70 | 2,7 |

Le Tableau Vb montre les distributions des dimensions de particules susceptibles d'être entraînées et les variations de ces distributions en fonction du temps de cisaillement de recyclage.

**TABLEAU Vb**

| PRODUIT | % volume au départ | | % volume à la fin | | Variation en % | |
|---|---|---|---|---|---|---|
| * | <100µm | <150µm | <100µm | <150µm | <100µm | <150µm |
| Eau | 5,8 | 11,9 | 5,5 | 12,8 | -5,2 | - 8,5 |
| JAGUAR 8000 - G. Guar HP | 1 ,8 | 3,8 | 2,2 | 4,8 | - 22,2 | - 26,3 |
| Nalcotrol II - Polyacrylamide | 2,0 | 4,7 | 3,8 | 10,8 | - 90,0 | - 129,8 |
| SeaSpen PF - Carraghénane | 4,3 | 9,9 | 4,1 | 10,7 | - 2,5 | - 8,1 |
| Viscarin GF 209 - Carraghénane | 3,8 | 8,9 | 3,7 | 8,9 | + 2,6 | 0 |
| Viscarin SD 389 - Carraghénane | 3,7 | 8,9 | 4,7 | 11,1 | - 27,0 | - 34,6 |
| Klucel - Cellulose HP | 3,3 | 8,1 | 3,5 | 8,5 | - 6,1 | - 4,9 |
| Gomme de cellulose 7M-Na CMC | 4,7 | 10,6 | 4,6 | 11,0 | + 2,1 | - 3,8 |
| Gomme de cellulose 250MR-HEC | 2,9 | 6,4 | 3,4 | 8,0 | -17,2 | 25,0 |
| Pemulen TR-1-Copolymère acryl. | 4,4 | 10,8 | 4,9 | 12,2 | - 11,4 | - 13,0 |
| Gomme arabique tech. | 5,1 | 12,4 | 5,7 | 13,4 | -11,8 | - 8,1 |
| Gomme de caroube | 4,0 | 9,8 | 4,1 | 9,9 | -2,5 | - 1,0 |
| Gomme tragacanth | 4,6 | 10,2 | 4,1 | 9,7 | + 21,7 | + 4,9 |
| Polyox 301 - PEC | 0,1 | 0,2 | 2,1 | 4,7 | - 2000 | - 2250 |
| Polyox Coagulant - PEC | 0,1 | 0,3 | 3,8 | 9,0 | - 3700 | - 2900 |
| K9A50 - Gomme gellan | 4,1 | 10,0 | 4,4 | 10,4 | - 7,3 | - 4,0 |
| K1A96 - Gomme whélan | 3,5 | 8,6 | 4,7 | 11,9 | - 30,6 | - 31,4 |
| K1A112 - Gomme rhamsan | 2,7 | 6,7 | 4,1 | 9,9 | - 86,4 | - 34,0 |
| Luviskol K90 -PVP | 4,1 | 9,4 | 4,5 | 10,0 | - 9,8 | - 6,4 |

| | | | | | | |
|---|---|---|---|---|---|---|
| * (+) la variation est favorable ; le volume diminue dans le temps ; (-) la variation est défavorable; le volume augmente dans le temps. | | | | | | |
| Par rapport au comportement de l'eau ; +/ - 8,5 % (ou plus) peut ne pas étre significatif. | | | | | | |

Aucun des composés testés n'apporte une protection aussi importante contre l'entraînement que le JAGUAR 8000 lorsque l'on juge en pourcentage de volume de gouttelettes pulvérisées inférieures à 100 ou 150 µm. Seul le Polyox 301 et le Polyox Coagulant (les deux étant des oxydes de polyéthylène) apporte une protection initiale plus importante, mais ces composés sont difficiles à atomiser et sont très rapidement sensibles au cisaillement. Signalons en passant que le "301" et le "Coagulant" ne s'atomisent pas facilement tant qu'ils n'ont pas été cisaillés et c'est ainsi que leur nombre initial de gouttelettes est inférieur à 1 000.

Le JAGUAR 8000 résiste très bien aux dégradations provoquées par le cisaillement, conservant, pour l'essentiel, son spectre de dimensions des gouttelettes pendant à peu près la durée du test, soit 40 minutes.

### Exemple VI

Ces tests sont effectués pour déterminer la concentration supérieure que l'on peut mettre en oeuvre avec la gomme Guar et ses dérivés afin de garantir les propriétés newtoniennes nécessaires pour maintenir constants les effets de réduction de l'entraînement dans les conditions de cisaillement que l'on est susceptible de rencontrer dans les applications par pulvérisation. Par comportement newtonien, on entend que la perte de viscosité à 100 sec.⁻¹ de cisaillement est inférieure à 20 % par rapport à la viscosité moyenne comprise entre 0,1 et 1,0 sec⁻¹ de cisaillement. Sil se produit une perte supérieure à 20 %, on considère que la composition a un comportement de liquide non newtonien, c'est-à-dire visco-élastique.

On examine les profils de viscosité d'une gomme Guar non modifiée et de deux gommes Guar modifiées.

On ajoute l'adjuvant à l'eau du test (eau du robinet ou dureté précisée autrement) à température ambiante (20-25°C). On agite à grande vitesse et l'adjuvant de réduction de l'entraînement est mélangé intimement et hydraté. Cela se fait normalement en 45 secondes.

On désaère la solution (pour éliminer la mousse ou l'air entraîné) en faisant le vide à sa surface ou par centrifugation.

On mesure la viscosité.
A. On détermine la visosité moyenne entre 0,1 et 1,0 seconde réciproque (sec.⁻¹) de cisaillement,
B. On mesure la viscosité à 100 secondes réciproques (sec.⁻¹) de cisaillement.

Le Tableau suivant résume les résultats des tests de viscosité.

**TABLEAU VI**

| Récapitulation des résultats rhéologiques | | | |
|---|---|---|---|
| | Viscosité moyenne (cP) | Viscosité (cP) | |
| Guar/Dérivé de Guar | (0,1 - 1,0 sec.⁻¹) | @ 100 sec.⁻¹) | Δ % |
| | | | |

| JAGUAR 8000 | | | |
|---|---|---|---|
| 0,25 % | 35,39 | 19,25 | -45,6 |
| 0,20 % | 18,49 | 12,38 | -33,0 |
| 0,15 % | 9,03 | 7,39 | -18,2 |
| 0,125 % | 8,01 | 6,48 | -19,2 |
| 0,100 % | 4,89 | 4,40 | -10,0 |
| 0,075 % | 3,36 | 3,11 | -7,7 |

| JAGUAR 8012 | | | |
|---|---|---|---|
| 0,25 % | 11,14 | 9,50 | -14,8 |
| 0,20 % | 6,98 | 6,56 | -16,1 |
| 0,15 % | 4,21 | 4,31 | + 2,3 |

| JAGUAR 2610 | | | |
|---|---|---|---|
| 0,20 % | 12,81 | 10,26 | -19,9 |
| 0,15 % | 6,63 | 6,15 | -7,2 |
| 0,10 % | 3,10 | 3,37 | + 8,8 |

| JAGUAR C-13S | | | |
|---|---|---|---|
| 0,15 % | 24,23 | 14,09 | -41,9 |
| 0,10 % | 9,90 | 7,48 | -24,5 |
| 0,05 % | 3,17 | 3,19 | + 0,5 |

Compte tenu de ce qui précède, la concentration supérieure de la gomme Guar et de ses dérivés dans les compositions aqueuses est celle qui permet d'obtenir une viscosité de l'ordre de 7,5 cP ou moins à 100 sec.⁻¹. L'intervalle de concentration nécessaire pour obtenir cette viscosité varie en fonction de la nature de la gomme Guar ou de son dérivé. Pour la gomme Guar, I'intervalle de concentration est compris entre 0,075 et moins de 0,2 % en poids par unité de volume, de préférence entre 0,075 et 0,18 % en poids/v. Pour les gommes Guar modifiées non cationiques, l'intervalle de concentration est compris entre 0,075 et 0,275 % en poids/v, de préférence entre 0,1 et 0,125 % en poids/v. Pour les gommes Guar cationiques, l'intervalle de concentration est compris entre 0,05 et 0,1 % en poids/v. Pour les mélanges d'au moins deux composants choisis dans le groupe comportant la gomme Guar et les dérivés de la gomme Guar, l'intervalle de concentration est compris entre 0,05 et 0,275 % en poids/v à condition que i) la concentration en gomme Guar cationique ne dépasse pas 0,1 % en poids/v et que ii) la concentration en gomme Guar non modifiée ne dépasse pas 0,2 % en poids/v.

## Revendications

1. Utilisation de gomme guar et/ou ses dérivés comme agent anti-entraînement dans un milieu de pulvérisation dont la composition comprend au stade de la dilution finale une majeure partie d'eau et comme seul agent anti-entraînement la guomme guar et/ou ses dérivés, dans des proportions telles que le mélange eau / gomme guar et/ou ses dérivés, a un comportement de liquide newtonien au stade de la dilution finale.

2. Utilisation selon la revendication précédente, dans laquelle l'agent antientraînement est la gomme guar en une quantité comprise entre 0,075 et moins de 0,2 % en poids par unité de volume, de préférence entre 0,075 et 0,18 % en poids par unité de volume.

3. Composition permettant de réduire l'entraînement des pulvérisations, contenant au stade de la dilution finale :
a) une majeure partie d'eau et
b) un seul agent anti-entraînement constitué essentiellement de gommes guars modifiées non cationiques et présent en une quantité comprise entre 0,075 et 0,275 % en poids par unité de volume.

4. Composition permettant de réduire l'entraînement des pulvérisations selon la revendication précédente, dans laquelle la quantité d'agent anti-entraînement est - comprise entre 0,1 et 0,125 % en poids par unité de volume.

5. Composition permettant de déduire l'entraînement des pulvérisations selon l'une quelconque des revendications 3 ou 4, dans laquelle la gomme quar modifiée non cationique est la gomme quar hydroxypropylée.

6. Composition permettant de réduire l'entraînement des pulvérisations selon l'une quelconque des revendications 3 ou 4, dans laquelle la gomme guar modifiée non cationique est la gomme guar carboxyméthyl hydroxypropylée.

7. Composition permettant de réduire l'entraînement des pulvérisations, contenant au stade de la dilution finale :
a) une majeure partie d'eau et
b) un seul agent anti-entraînement constitué essentiellement de gomme guar cationique et présent en une quantité comprise entre 0,05 et 0,1 % en poids par unité de volume.

8. Composition permettant de réduire l'entraînement des pulvérisations, contenant au stade de la dilution finale :
a) une majeure partie d'eau et
b) un seul agent anti-entraînement présent dans une quantité comprise entre 0,05 et 0,275 % en poids par unité de volume et constitué essentiellement d'un agent anti-entraînement, et comportant au moins deux composants choisis dans le groupe comportant la gomme guar et les dérivés de la gomme guar, à condition que :
i) la concentration en gomme guar cationique ne dépasse pas 0,1 % en poids par unité de volume et que
ii) la concentration en gomme guar non modifiée ne dépasse pas 0,2 % en poids par unité de volume.

9. Utilisation selon l'une quelconque des revendications 1 ou 2, et composition permettant de réduire l'entraînement des pulvérisations selon l'une quelconque des revendications 3 à 8, caractérisée en ce qu'elle contient, en plus, une quantité bioactivement efficace d'une substance bioactive.

10. Utilisation ou composition selon la revendication précédente, dans laquelle la substance bioactive est un pesticide.

11. Procédé de réduction de l'entraînement pendant la pulvérisation ou l'épandage dans l'air d'une composition aqueuse comprenant une majeure partie d'eau et, pour l'essentiel, aucun agent anti-entraînement, comportant les étapes suivantes :
Mélange de ladite composition avant ladite pulvérisation ou ledit épandage avec un seul agent anti-entraînement constitué essentiellement de gomme guar et/ou ses dérivés, et présent dans une quantité telle que le mélange eau / gomme guar et/ou ses dérivés, ait un comportement de liquide newtonien au stade de la dilution finale et
pulvérisation ou épandage de ce mélange dans l'air.

12. Procédé selon la revendication précédente, dans lequel l'agent anti-entraînement est la gomme guar en une quantité comprise entre 0,075 et moins de 0,20 % en poids par unité de volume au stade de la dilution finale, de préférence comprise entre 0,075 et 0,18 % en poids par unité de volume.

13. Procédé de réduction de l'entraînement pendant la pulvérisation ou l'épandage dans l'air d'une composition aqueuse comprenant une majeure partie d'eau et, pour l'essentiel, aucun agent anti-entraînement, comportant les étapes suivantes :
Mélange de ladite composition avant ladite pulvérisation ou ledit épandage avec un seul agent anti-entraînement constitué essentiellement de gomme guar modifiée non cationique et présent dans une quantité comprise entre 0,075 et 0,275 % en poids par unité de volume au stade de la dilution finale, et
pulvérisation ou épandage de ce mélange dans l'air.

14. Procédé selon la revendication précédente, dans lequel la quantité d'agent anti-entraînement est comprise entre 0,1 et 0,125 % en poids par unité de volume au stade de la dilution finale.

15. Procédé selon l'une quelconque des revendications 13 ou 14, dans lequel la gomme guar modifiée non cationique est la gomme guar hydroxypropylée.

16. Procédé selon l'une quelconque des revendications 13 ou 14, dans lequel la gomme guar modifiée non cationique est la gomme guar carboxyméthyl hydroxypropylée.

17. Procédé de réduction de l'entraînement pendant la pulvérisation ou l'épandage dans l'air d'une composition aqueuse comprenant une majeure partie d'eau et, pour l'essentiel, aucun agent anti-entraînement, comportant les étapes suivantes :
Mélange de ladite composition avant ladite pulvérisation ou ledit épandage avec un seul agent anti-entraînement constitué essentiellement de gomme guar cationique et présent dans une quantité comprise entre 0,05 et 0,1 % en poids par unité de volume au stade de la dilution finale, et
pulvérisation ou épandage de ce mélange dans l'air.

18. Procédé de réduction de l'entraînement pendant la pulvérisation ou l'épandage dans l'air d'une composition aqueuse comprenant une majeure partie d'eau et, pour l'essentiel, aucun agent anti-entraînement, comportant les étapes suivantes :
mélange de ladite composition avant ladite pulvérisation ou ledit épandage avec un seul agent anti-entraînement présent dans une quantité comprise entre 0,05 et 0,275 % en poids par unité de volume au stade de la dilution finale, et comportant au moins deux composants choisis dans le groupe comprenant la gomme guar et les dérivés de la gomme guar, à condition que :
i) la concentration en gomme guar cationique ne dépasse pas 0,1 % en poids par unité de volume et que
ii) la concentration en gomme guar non modifiée ne dépasse pas 0,2 % en poids par unité de volume, et
pulvérisation ou épandage de ce mélange dans l'air.

19. Procédé selon l'une quelconque des revendications 11 à 18, dans lequel la composition aqueuse comprend une quantité bioactivement efficace d'une substance bioactive.

20. Procédé selon la revendication précédente, dans lequel la substance bioactive est un pesticide.

## Claims

1. Use of guar gum and/or its derivatives as antidrift agent in a spray medium whose composition comprises, at the final dilution stage, mainly water and, as sole antidrift agent, guar gum and/or its derivatives, in proportions such that the mixture water/guar gum and/or its derivatives has a Newtonian liquid behaviour at the final dilution stage.

2. Use according to the preceding claim, in which the antidrift agent is guar gum in a quantity of between 0.075 and less than 0.2% by weight per unit of volume, preferably between 0.075 and 0.18% by weight per unit of volume.

3. Composition which makes it possible to reduce spray drift, containing at the final dilution stage:
a) mainly water, and
b) a single antidrift agent consisting essentially of non-cationic modified guar gums and present in a quantity of between 0.075 and 0.275% by weight per unit of volume.

4. Composition which makes it possible to reduce spray drift according to the preceding claim, in which the quantity of antidrift agent is between 0.1 and 0.125% by weight per unit of volume.

5. Composition which makes it possible to reduce spray drift according to either of claims 3 and 4, in which the non-cationic modified guar gum is hydroxypropylated guar gum.

6. Composition which makes it possible to reduce spray drift according to either of claims 3 and 4, in which the non-cationic modified guar gum is carboxymethyl hydroxypropylated guar gum.

7. Composition which makes it possible to reduce spray drift, containing at the final dilution stage:
a) mainly water, and
b) a single antidrift agent consisting essentially of cationic guar gum and present in a quantity of between 0.05 and 0.1% by weight per unit of volume.

8. Composition which makes it possible to reduce spray drift, containing at the final dilution stage:
a) mainly water, and
b) a single antidrift agent present in a quantity of between 0.05 and 0.275% by weight per unit of volume and consisting essentially of an antidrift agent, and comprising at least two components chosen from the group comprising guar gum and derivatives of guar gum, provided that:
i) the cationic guar gum concentration does not exceed 0.1% by weight per unit of volume, and that
ii) the unmodified guar gum concentration does not exceed 0.2% by weight per unit of volume.

9. Use according to either of claims 1 and 2, and composition which makes it possible to reduce spray drift according to any one of claims 3 to 8, characterized in that it contains, in addition, a bioactively effective quantity of bioactive substance.

10. Use or composition according to the preceding claim, in which the bioactive substance is a pesticide.

11. Method of reducing drift during spraying or spreading into the air of an aqueous composition comprising mainly water and essentially no antidrift agent, comprising the following steps:
mixing the said composition before the said spraying or the said spreading with a single antidrift agent consisting essentially of guar gum and/or its derivatives and present in a quantity such that the mixture water/guar gum and/or its derivatives has a Newtonian liquid behaviour at the final dilution stage, and
spraying or spreading this mixture into the air.

12. Method according to the preceding claim, in which the antidrift agent is guar gum in a quantity of between 0.075 and less than 0.20% by weight per unit of volume at the final dilution stage, preferably of between 0.075 and 0.18% by weight per unit of volume.

13. Method of reducing drift during spraying or spreading into the air of an aqueous composition comprising mainly water and essentially no antidrift agent, comprising the following steps:
mixing the said composition before the said spraying or the said spreading with a single antidrift agent consisting essentially of non-cationic modified guar gum and present in a quantity of between 0.075 and 0.275% by weight per unit of volume at the final dilution stage, and
spraying or spreading this mixture into the air.

14. Method according to the preceding claim, in which the quantity of antidrift agent is between 0.1 and 0.125% by weight per unit of volume at the final dilution stage.

15. Method according to either of claims 13 and 14, in which the non-cationic modified guar gum is hydroxypropylated guar gum.

16. Method according to either of claims 13 and 14, in which the non-cationic modified guar gum is carboxymethyl hydroxypropylated guar gum.

17. Method of reducing drift during spraying or spreading into the air of an aqueous composition comprising mainly water and essentially no antidrift agent, comprising the following steps:
mixing the said composition before the said spraying or the said spreading with a single antidrift agent consisting essentially of cationic guar gum and present in a quantity of between 0.05 and 0.1% by weight per unit of volume at the final dilution stage, and
spraying or spreading this mixture into the air.

18. Method of reducing drift during spraying or spreading into the air of an aqueous composition comprising mainly water and essentially no antidrift agent, comprising the following steps:
mixing the said composition before the said spraying or the said spreading with a single antidrift agent present in a quantity of between 0.05 and 0.275% by weight per unit of volume at the final dilution stage, and comprising at least two components chosen from the group consisting of guar gum and derivatives of guar gum, provided that:
i) the cationic guar gum concentration does not exceed 0.1% by weight per unit of volume, and that
ii) the unmodified guar gum concentration does not exceed 0.2% by weight per unit of volume, and
spraying or spreading this material into the air.

19. Method according to any one of claims 11 to 18, in which the aqueous composition comprises a bioactively effective quantity of a bioactive substance.

20. Method according to the preceding claim, in which the bioactive substance is a pesticide.

## Patentansprüche

1. Verwendung von Guar Gum und/oder seinen Derivaten als Antiabdriftmittel in einem Zerstäubungsmilieu, dessen Zusammensetzung im Stadium der Endverdünnung eine Hauptmenge Wasser und als einziges Antiabdriftmittel Guar Gum und/oder seine Derivate in solchen Verhältnissen umfaßt, daß das Gemisch Wasser/Guar Gum und/oder seine Derivate im Stadium der Endverdünnung das Verhalten einer Newtonschen Flüssigkeit aufweist.

2. Verwendung nach dem vorhergehenden Anspruch, worin das Antiabdriftmittel Guar Gum in einer Menge ist, welchezwischen 0,075 und weniger als 0,2 Gew.% pro Volumeneinheit, vorzugsweise zwischen 0,075 und 0,18 Gew.% pro Volumeneinheit enthalten ist.

3. Das Adriften von Zerstäubungen vermindernde Zusammensetzung, welche im Stadium der Endverdünnung:
a) eine Hauptmenge Wasser und
b) ein einziges Antiabdriftmittel, das im wesentlichen aus nicht-kationischem, modifiziertem Guar Gum in einer Menge enthalt, welche zwischen 0,075 und 0,275 Gew.% pro Volumeneinheit enthalten ist.

4. Das Abtriften von Zerstäubungen vermindernde Zusammensetzung nach dem vorhergehenden Anspruch, worin die Menge an Antiabdriftmittel zwischen 0,1 und 0,125 Gew.% pro Volumeneinheit enthalten ist.

5. Das Abdriften von Zerstäubungen vermindernde Zusammensetzung nach einem der Ansprüche 3 oder 4, worin das nichtkationische, modifizierte Guar Gum hydroxipropyliertes Guar Gum ist.

6. Das Abdriften von Zerstäubungen vermindernde Zusammensetzung nach einem der Ansprüche 3 oder 4, worin das nichtkationische, modifizierte Guar Gum hydroxypropyliertes Carboxymethyl-Guar Gum ist.

7. Das Abdriften von Zerstäubungen vermindernde Zusammensetzung, welche im Stadium der Endverdünnung:
a) eine Hauptmenge Wasser und
b) ein einziges Antiabdriftmittel, das im wesentlichen aus kationischem Guar Gum besteht, in einer Menge enthält, welche zwischen 0,05 und 0,1 Gew.% pro Volumeneinheit enthalten ist.

8. Das Abdriften von Zerstäubungen vermindernde Zusammensetzung, welche im Stadium der Endverdünnung:
a) eine Hauptmenge Wasser und
b) ein einziges Antiabdriftmittel in einer Menge enthält, welche zwischen 0,05 und 0,275 Gew.% pro Volumeneinheit enthalten ist und im wesentlichen aus einem Antiabdriftmittel besteht, und wenigstens zwei Bestandteile umfaßt, welche aus der Gruppe ausgewählt sind, welche Guar Gum und die Guar Gum-Derivate umfaßt, unter der Bedingungen, daß:
i) die Konzentration an kationischem Guar Gum 0,1 Gew.% pro Volumeneinheit nicht überschreitet und daß
ii) die Konzentration an nicht-modifiziertem Guar Gum 0,2 Gew.% pro Volumeneinheit nicht überschreitet.

9. Verwendung nach einem der Ansprüche 1 oder 2 und das Abdriften von Zerstäubungen vermindernde Zusammensetzung nach einem der Ansprüche 3 bis 8, dadurch gekennzeichnet, daß sie des weiteren eine bioaktiv wirksame Menge einer bioaktiven Substanz enthält.

10. Verwendung oder Zusammensetzung nach dem vorhergehenden Anspruch, worin die bioaktive Substanz ein Pestizid ist.

11. Verfahren zur Verminderung des Abdriftens während der Zerstäubung oder der Düngerstreuung in Luft einer wäßrigen Zusammensetzung, welche eine Hauptmenge Wasser und im wesentlichen irgendein Antiabdriftmittel umfaßt, das die folgenden Schritte umfaßt:
Vermischen der Zusammensetzung vor der Zerstäubung oder Düngung mit einem einzigen Antiabdriftmittel, das im wesentlichen aus Guar Gum und/oder seinen Derivaten besteht in einer Menge, daß das Gemisch Wasser/Guar Gum und/oder seine Derivate im Stadium der Endverdünnung das Verhalten einer Newtonschen Flüssigkeit aufweisen wird, und Zerstäuben oder Düngerstreuen dieses Gemisches in Luft.

12. Verfahren nach dem vorhergehenden Anspruch, worin das Antiabdriftmittel Guar Gum in einer Menge ist, welche zwischen 0,075 und weniger als 0,20 Gew.% pro Volumeneinheit im Stadium der Endverdünnung, vorzugsweise zwischen 0,075 und 0,18 Gew.% pro Volumeneinheit, enthalten ist.

13. Verfahren zur Verminderung des Abdriftens während der Zerstäubung oder Düngerstreuung in Luft einer wäßrigen Zusammensetzung, welche eine Hauptmenge Wasser und im wesentlichen irgendein Antiabdriftmittel umfaßt, das die folgenden Schritte umfaßt:
Vermischen der Zusammensetzung vor dem Zerstäuben oder Düngerstreuen mit einem einzigen Antiabdriftmittel, das im wesentlichen aus nicht-kationischem, modifiziertem Guar Gum in einer Menge besteht, welche zwischen 0,075 und 0,275 Gew.% pro Volumeneinheit im Stadium der Endverdünnung enthalten ist und Zerstäuben oder Düngerstreuung dieses Gemisches in Luft.

14. Verfahren nach dem vorhergehenden Anspruch, worin die Menge an Antiabdriftmittel zwischen 0,1 und 0,125 Gew.% pro Volumeneinheit im Stadium der Endverdünnung enthalten ist.

15. Verfahren nach irgendeinem der Ansprüche 13 oder 14, worin das nicht-kationische Guar Gum hydroxipropyliertes Guar Gum ist.

16. Verfahren nach irgendeinem der Ansprüche 13 oder 14, worin das nicht-kationische, modifizierte Guar Gum hydroxipropyliertes Carboxymethyl-Guar Gum ist.

17. Verfahren zur Verminderung des Abdriftens während des Zerstäubung oder Düngerstreuung in Luft einer wäßrigen Zusammensetzung, welche eine Hauptmenge Wasser und im wesentlichen irgendein Antiabdriftmittel umfaßt, das die folgenden Stufen umfaßt:
Vermischen der Zusammensetzung vor dem Zerstäuben oder Düngerstreuen mit einem einzigen Antiabdriftmittel, das im wesentlichen aus kationischem Guar Gum in einer Menge besteht, welche zwischen 0,05 und 0,1 Gew.% pro Volumeneinheit im Stadium der Endverdünnung enthalten ist, und Zerstäuben oder Düngerstreuung dieses Gemisches in Luft.

18. Verfahren zur Verminderung des Abdriftens während der Zerstäubung oder Düngerstreuung in Luft einer wäßrigen Zusammensetzung, welche eine Hauptmenge Wasser und im wesentlichen irgendein Antiabdriftmittel umfaßt, das die folgenden Schritte umfaßt:
Vermischen der Zusammensetzung vor der Zerstäubung oder der Düngerstreuung mit einem einzigen Antiabdriftmittel, das in einer Menge vorliegt, welche zwischen 0,05 und 0,275 Gew.% pro Volumeneinheit im Stadium der Endverdünnung enthalten ist und wenigstens zwei Bestandteile umfaßt, welche aus der Gruppe ausgewählt sind, welche das Guar Gum und die Guar Gum-Derivate umfaßt, bei Bedingungen, daß
i) die Konzentration an kationischem Guar Gum 0,1 Gew.% pro Volumeneinheit nicht überschreitet und daß
ii) die Konzentration an nicht-modifiziertem Guar Gum 0,2 Gew.% pro Volumeneinheit nicht überschreitet und
Zerstäuben oder Düngerstreuung dieses Gemisches in Luft.

19. Verfahren nach einem der Ansprüche 11 bis 18, worin die wäßrige Zusammensetzung eine bioaktiv wirksame Menge einer bioaktiven Substanz umfaßt.

20. Verfahren nach dem vorhergehenden Anspruch, worin die bioaktive Substanz ein Pestizid ist.
